# EUROPEAN PATENT SPECIFICATION

(11) **EP 0 329 426 B1**
(45) Date of publication and mention of the grant of the patent: **24.11.1993**
(21) Application number: 89301464.7
(22) Date of filing: 15.02.1989
(51) Int. Cl.: G11B 7/00, G11B 7/26

(54) **Optical card and manufacturing method thereof**
Optische Karte und Herstellungsverfahren dafür
Carte d'enregistrement optique et méthode de fabrication d'une telle carte

(30) Priority: 15.02.1988 JP 32124/88
(43) Date of publication of application: 23.08.1989
(73) Proprietor: SHARP KABUSHIKI KAISHA, Osaka 545 (JP)
(72) Inventor: Ohta, Kenji, Kitakatsuragi-gun Nara-ken (JP); Katayama, Hiroyuki, Nara-shi Nara-ken (JP); Nakayama, Junichiro, Shiki-gun Nara-ken (JP); Kimura, Kazuhiro, Nishinomiya-shi Hyogo-ken (JP); Hirokane, Junji, Nara-shi Nara-ken (JP); Takahashi, Akira, Nara-shi Nara-ken (JP)
(74) Representative: Brown, Kenneth Richard

(56) References cited:
- EP-A- 0 126 594
- EP-A- 0 158 908
- Review of the Electrical Communication Laboratories vol. 32, no. 2, 1984, Tokyo, Japan page A Takeshima et al: "Properties of Injection-Molded Plastic Substrates for Laser Beam Memories"
- PATENT ABSTRACTS OF JAPAN vol. 11, no. 45 (P-546)(2492) 10 February 1987, & JP-A-61 214151

## Description

The present invention relates to an optical card for recording, reproducing or erasing information optically and to a method for manufacturing the optical card.

Optical memory is expected to further develop as a memory means of a high density and high capacity. As the optical memory now in practical use, the compact disk, video-disk and the like exclusively for reproduction is known, and for these there is already a large market. As to optical disks of the write once-type and rewritable type, too, active studies are being made in various fields for new possibilities for further expanding the scope of application for the optical memory.

Meanwhile, as a counterpart of the aforementioned disk-like optical memory improved in portability there is known a card-like optical memory (hereinafter called "optical card"). This optical card is now drawing attention for its features as optical memory, as a novel type of card with its capacity possibly far exceeding that of a magnetic cards of the conventional type.

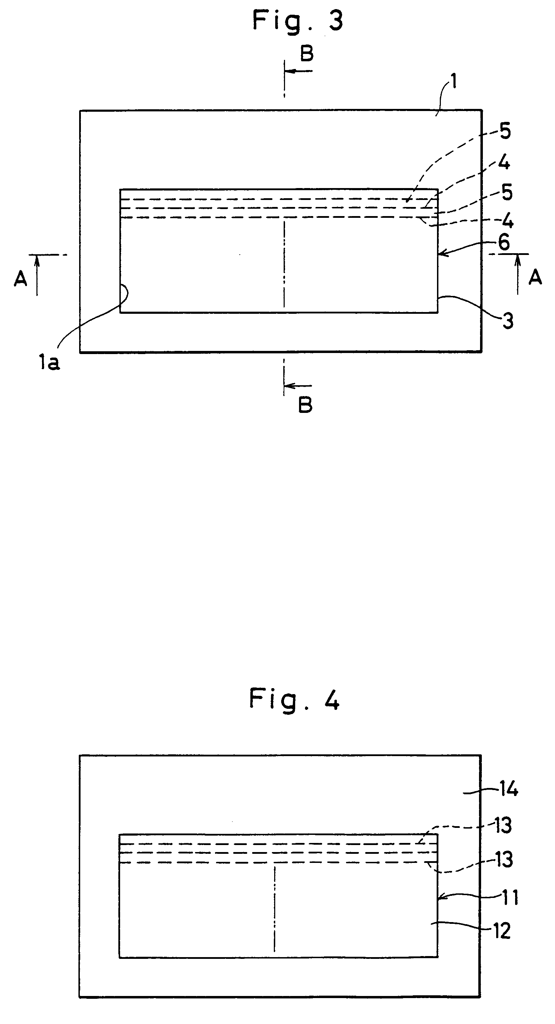

Referring to Fig. 4, the optical card of such a conventional type has a recording medium part 11, which is recordable, reproducible or erasable. This recording medium part 11 is composed of a light transmitting substrate 12 and a recording layer (not shown) formed on the back of this light transmitting substrate 12. On this recording medium part 11 there are formed rectilinear guide tracks 13, and it is so arranged that the information bits are formed along these guide tracks 13, or the formed information bits are erased or the recorded information is reproduced in accordance with the information bits or the like.

The aforementioned light transmitting substrate 12 is made of a material similar to that of a card substrate 14, and normally a part of the card substrate 14 made of a plastic is utilized. It is made, for instance, by forming predetermined recesses and/or protrusions in a portion of the back of the card substrate 14, and after forming a recording layer on the recesses and/or protrusions to form the recording medium part 11 with guide tracks 13 made therein, bonding a protective substrate to the back of the recording layer and the card substrate 14.

It is, however, often the case that the optical card is carried in a pocket or the like. Hence, if the card substrate 14 is made of a plastic, as mentioned above, it is often the case that the card substrate 14 is deformed to cause warping of the recording medium part 11 as it is used for a long time.

In such a case, each time information is recorded, reproduced or erased, it is difficult to have the recording medium part 11 kept within the range of focal depth of the convergent beam which is determined by the focus servo control unit of the card reader. Also, since the beam is focused through the card substrate 14, warping of the card substrate 14 causes aberration of the convergent beam, so that the necessary beam diameter is difficult to obtain.

Further, it is often the case that damage is caused to the recording medium part 11 of the card substrate 14 as the card is carried, and in such a case bit errors such as misreading of the signal bits occur and also the inability of forming new bits is likely.

It is a primary object of the present invention to provide an optical card wherein a substrate constituting a part of a recording medium part thereof is resistant to deformation such as warping due to secular changes or changes in temperature and also less vulnerable to damage as the substrate is high in hardness, that is, an optical card which can allow proper and easy focus servo control, enable obtaining the required beam diameter and is improved in safety from bit errors due to damage, hence retaining a high reliability for a long time.

Another object of the present invention is to provide a method for manufacturing a large quantity of such optical cards high in reliability and well standardized or uniform in quality easily and efficiently.

The invention provides an optical card comprising a recording medium part composed of a glass substrate and a recording layer formed on one side of the glass substrate, and a plastic substrate, said recording medium part being embedded in a recess in the surface of said plastic substrate so that said recording layer is sandwiched between the glass substrate and the plastic substrate and the other side of the glass substrate lies substantially flush with the surrounding plastic substrate surface according to EP-A-0 158 906, characterised in that said other side of the glass substrate constitutes part of the exposed surface of the optical card.

The aforementioned glass substrate may have guide tracks formed on its surface.

Also, the aforementioned recording medium part and the plastic substrate may be bonded to each other with an adhesive layer therebetween.

The method for manufacturing the optical card described above consists in first forming the recording medium part, composed of the glass substrate and the recording layer for recording information, and then injection moulding a plastic material with the recording medium part as the insert to form a plastic substrate with the recording medium part embedded therein.

An alternative method for manufacturing the optical card described above consists in first forming the recording medium part, composed of the glass substrate and the recording layer for recording information, and then pressing it into a heated plastic sheet to be embedded therein, thus integrating the recording medium part with the plastic substrate.

Fig. 1 is a sectional view of an optical card of the present invention taken along the line A - A in Fig. 3.

Fig. 2 is another sectional view taken along the line B - B in Fig. 3.

Fig. 3 is a plan view of the aforementioned optical card.

Fig. 4 is a plan view of a conventional optical card.

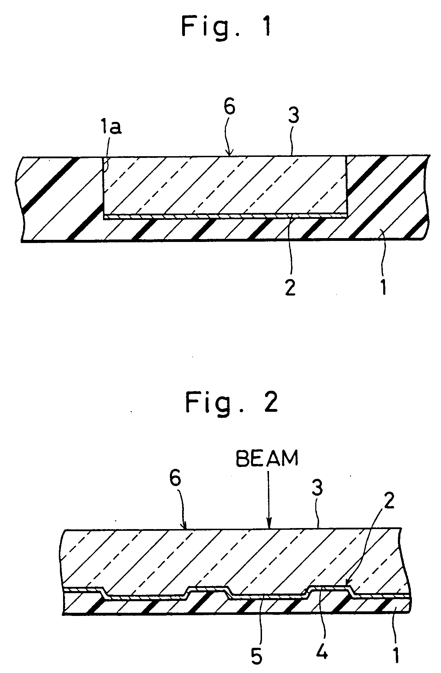

An embodiment of the present invention is described below with reference being made to Figs. 1-3.

An optical card of this invention comprises a protective, plastic substrate 1 as the back layer, a glass substrate 3 as the surface layer and the recording layer 2 formed between the plastic substrate 1 and the glass substrate 3, as shown in Figs. 1 and 2.

The aforementioned glass substrate 3 is rectangular, as seen from Fig. 3, and although there is no particular limitation with regard to its material, it may preferably be made of a kind of glass easy to reinforce chemically such as sodium aluminosilicate glass. On the underside of the glass substrate 3 are formed rectilinear recesses and protrusions alternately and parallel to one another. The recesses are formed approximately 0.05-0.2 µm deep from the top of the protrusions. The width of the recesses is approximately 0.4-3 µm, while that of the protrusions is approximately 0.8-5 µm.

The shape of the glass substrate 3 and the direction in which the aforementioned recesses and protrusions are formed may be determined appropriately, not limited to what is described above.

The side with recesses and protrusions of the aforementioned glass substrate 3 is laminated with a layer of predetermined material for formation of a recording layer 2 for recording information. The parts of this recording layer 2 corresponding to the recesses of the aforementioned glass 3 are guide tracks 4, while those corresponding to the protrusions are recording parts 5 where the information bits are formed.

The relationship between the recesses and protrusions of the glass substrate 3 and the corresponding guide tracks 4 and recording parts 5 may possibly be reversed. There is no particular limitation with regard to the kind of the recording layer 2. An information recording medium part 6 is composed of the aforesaid recording layer 2 and the glass substrate 3.

The plastic substrate 1 is made of polycarbonate resin, acrylic resin, polystyrene resin or epoxy resin or the like, is rectangular and larger in dimensions than the glass substrate 3. This plastic substrate 1 has a recess 1a formed in the central part thereof, and in this recess 1a the recording medium part 6 is embedded so that the surface of the glass substrate 3 is flush with that of the plastic substrate 1. Hence the bottom of the aforementioned recess 1a has recesses and protrusions matching those of the recording layer 2.

With the optical card of the above composition recording of information, reproducing or erasing of the recorded information is done by means of the predetermined beam incident upon the recording layer 2 through the glass substrate 3 with the guide track 4 as reference.

In any such operation focus servo controlling can be done properly and easily, for the recording medium part 6 has the glass substrate 3, and the guide track 4 which serves as reference and the recording parts 5 are both defined by the recording layer 2 formed on one side of the glass substrate 3 and, further, the necessary beam diameter is obtainable and there is an improved safety from bit errors.

This is because the glass substrate 3 has little risk of deformation such as warping due to secular changes or changes in temperature or the like and also has a high hardness. When as the recording layer 2 a magneto-optical layer made of some rare earth element weak to oxygen or moisture is used, the glass substrate 3 lower in permeability to oxygen or water than plastics is better suited for the purpose.

With the optical card of this kind it is possible to have it so arranged that the beam is directed to be incident upon the recording medium part 6 comprising the glass substrate 3 from the plastic substrate 1 side.

Now, the method of manufacturing the aforementioned optical card is described.

First, on one side of a glass plate flat recesses and protrusions of given dimensions extending rectilinearly are formed alternately and parallel to one another and the rectangular glass substrate 3 is thus obtained. Then, the recording layer 2 is formed on the side with recesses and protrusions of the glass substrate 3 by laminating a layer of a recording material to thereby form the recording medium part 6. Thereafter, a plastic material is injection moulded with the recording medium part 6 as the insert to form the plastic substrate 1 integral with the recording medium part 6 embedded therein with its surface flush with that of the glass substrate 3 and the optical card is thus obtained.

The so-called insert moulding described above, when it is applied to the manufacture of such an optical card, enables speedy mass-production of optical cards well standardized or uniform in quality.

An alternative method of manufacturing optical cards consists in first heating a plastic material of the plastic substrate 1 to a predetermined range of temperature, then pressing the recording medium part 6 formed in a like way thereinto to be embedded therein with the top of the glass substrate 3 exposed and integral with the plastic substrate 1.

As described above, the optical card of the present invention has the recording medium part, composed of the recording layer for recording information and the substrate, and the protective, plastic substrate is formed on the recording layer side of the recording medium part, and features that the substrate of the aforementioned recording medium part is made of glass.

Hence, the type of optical card, in which the substrate forming a portion of the recording medium part is resistant to deformation such as warping due to secular changes or changes in temperature et cetera and also less vulnerable to damage as the substrate is high in hardness, is obtainable. That is, the optical card so obtained allows proper and easy focus servo control, enabling to obtain the necessary beam diameter, and being improved in safety from damage-induced bit errors, hence a high reliability being maintained for a long period, is obtainable.

The aforementioned glass substrate may have formed on one side thereof guide tracks.

By this, the risk of bit errors et cetera can further be reduced with further improvement of its reliability.

The aforementioned recording medium part and the plastic substrate may also be bonded together by means of an adhesive layer therebetween and in this case, too, an optical card of a high reliability is obtainable.

The method of manufacturing the optical card of the present invention consists in first forming the recording medium part, composed of the glass substrate and the recording layer for recording information, then injection moulding a plastic material with the recording medium part as the insert so as to form the plastic substrate with the recording medium part embedded therein with the top of the glass substrate exposed.

As an alternative method of manufacturing the optical card the recording medium part, composed of the glass substrate and the recording layer for recording information, may be formed first, then the recording medium part so formed may be pressed into a heated plastic material to be embedded therein and integral therewith.

By this method, too, mass-production of the optical card well standardized or uniform in quality and high in reliability can be done easily and efficiently, this resulting in a marked improvement in productivity.

The invention being thus described, it will be obvious that the same may be varied in many ways. Such variations are not to be regarded as a departure from the scope of the invention.

There are described above novel features which the skilled man will appreciate give rise to advantages.

## Claims

1. An optical card comprising a recording medium part (6) composed of a glass substrate (3) and a recording layer (2) formed on one side of the glass substrate, and a plastic substrate (1), said recording medium part (6) being embedded in a recess (1a) in the surface of said plastic substrate (1) so that said recording layer (2) is sandwiched between the glass substrate and the plastic substrate and the other side of the glass substrate lies substantially flush with the surrounding plastic substrate surface, characterised in that said other side of the glass substrate constitutes part of the exposed surface of the optical card.

2. An optical card according to claim 1, wherein said one side of the glass substrate (3) has guide tracks (4) formed thereon.

3. An optical card according to claim 1 or claim 2, wherein said recording layer (2) consists of a layer of magneto-optical material.

4. A method for manufacturing the optical card defined by claim 1, consisting of first forming said recording medium part (6), and then injection moulding a plastic material with said recording medium part as an insert to form said plastic substrate (1) having the recording medium part embedded therein with the surface of said glass substrate (3) exposed.

5. A method for manufacturing the optical card defined by claim 1, consisting of first forming said recording medium part (6), and then pushing said recording medium part into a heated plastic material to form said plastic substrate (1) having the recording medium part embedded therein with the surface of said glass substrate (3) exposed.

6. A method for manufacturing the optical card defined by claim 1, including the step of bonding said recording medium part (6) and said plastic substrate (1) to each other with an adhesive layer therebetween.

## Patentansprüche

1. Optische Karte mit einem Aufzeichnungsmediumteil (6) aus einem Glassubstrat (3) und einer auf einer Seite des Glassubstrates ausgebildeten Aufzeichnungsschicht (2), und einem Kunststoffsubstrat (1), wobei der Aufzeichnungsmediumteil (6) in einer Aussparung (1a) in der Oberfläche des Kunststoffsubstrats (1) so eingebettet ist, daß die Aufzeichnungsschicht (2) zwischen dem Glassubstrat und dem Kunststoffsubstrat liegt, und die andere Seite des Glassubstrates im wesentlichen fluchtend zur umgebenden Oberfläche des Kunststoffsubstrats liegt, **dadurch gekennzeichnet,** daß die Außenseite des Glassubstrates einen Teil der freiliegenden Oberfläche der optischen Karte bildet.

2. Optische Karte nach Anspruch 1, bei der die eine Seite des Glassubstrates (3) auf ihr ausgebildete Führungsspuren (4) aufweist.

3. Optische Karte nach Anspruch 1 oder Anspruch 2, bei der die Aufzeichnungsschicht (2) aus einer Schicht eines magnetooptischen Materials besteht.

4. Verfahren zum Herstellen der optischen Karte gemäß Anspruch 1, bei dem zunächst der Aufzeichnungsmediumteil (6) hergestellt wird und dann ein Kunststoffmaterial mit dem Aufzeichnungsmediumteil als Einlage durch Spritzgießen hergestellt wird, um das Kunststoffsubstrat (1) herzustellen, in dem der Aufzeichnungsmediumteil eingebettet ist, wobei die Oberfläche des Glassubstrates (3) freiliegt.

5. Verfahren zum Herstellen der optischen Karte nach Anspruch 1, bei dem zunächst der Aufzeichnungsmediumteil (6) hergestellt wird, und dann dieser Aufzeichnungsmediumteil in ein erwärmtes Plastikmaterial eingeschoben wird, um das Kunststoffsubstrat (1) herzustellen, in das der Aufzeichnungsmediumteil eingebettet ist, wobei die Oberfläche des Glassubstrates (3) freiliegt.

6. Verfahren zum Herstellen der optischen Karte nach Anspruch 1, mit dem Schritt des Verbindens des Aufzeichnungsmediumteils (6) und des Kunststoffsubstrats (1) miteinander über eine dazwischenliegende Kleberschicht.

## Revendications

1. Carte optique comprenant une partie support d'enregistrement (6) composée d'un substrat en verre (3) et d'une couche d'enregistrement (2) située sur une face du substrat en verre, et d'un substrat en plastique (1), ladite partie support d'enregistrement (6) étant encastrée dans une cavité (1a) à la surface dudit substrat en plastique (1) de façon à ce que ladite couche d'enregistrement (2) soit intercalée entre le substrat en verre et le substrat en plastique, et que l'autre face du substrat en verre soit disposée pratiquement à fleur de la surface de substrat plastique l'entourant, caractérisée en ce que ladite autre face du substrat en verre constitue une partie de la surface exposée de la carte optique.

2. Carte optique selon la revendication 1, dans laquelle ladite une face du substrat en verre (3) est pourvue de pistes de guidage (4).

3. Carte optique selon la revendication 1 ou la revendication 2, dans laquelle ladite couche d'enregistrement (2) est une couche composée d'un matériau magnéto-optique.

4. Procédé de fabrication de la carte optique définie par la revendication 1, consistant en premier lieu à réaliser ladite partie support d'enregistrement (6), et ensuite le moulage par injection d'un matériau plastique en utilisant ladite partie support d'enregistrement comme insert pour réaliser ledit substrat plastique (1) avec la partie support d'enregistrement insérée à l'intérieur, la surface dudit substrat en verre (3) étant exposée.

5. Procédé de fabrication de la carte optique définie par la revendication 1, consistant en premier lieu à réaliser ladite partie support d'enregistrement (6), et ensuite à pousser ladite partie support d'enregistrement dans un matériau plastique chauffé afin de former ledit substrat plastique (1) avec la partie support d'enregistrement insérée à l'intérieur, la surface dudit substrat en verre (3) étant exposée.

6. Procédé de fabrication de la carte optique définie par la revendication 1, incluant une phase de collage de ladite partie support d'enregistrement (6) et dudit substrat en plastique (1) l'un à l'autre avec une couche adhésive entre les deux.
